(19) Europäisches Patentamt

European Patent Office

Office européen des brevets

(11) **EP 4 716 231 A1**

(12) **EUROPEAN PATENT APPLICATION**
published in accordance with Art. 153(4) EPC

(43) Date of publication:
25.03.2026 Bulletin 2026/13

(21) Application number: 24830507.0

(22) Date of filing: 13.06.2024

(51) International Patent Classification (IPC):
*H04Q 1/02* (2006.01)   *G01D 21/02* (2006.01)

(52) Cooperative Patent Classification (CPC):
G01C 5/06; G01D 21/02; H01Q 1/12; H01Q 1/24;
H04Q 1/02; H04Q 1/04; H04W 88/08

(86) International application number:
PCT/CN2024/098897

(87) International publication number:
WO 2025/001861 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310801000

(71) Applicant: Huawei Technologies Co., Ltd.
Shenzhen, Guangdong 518129 (CN)

(72) Inventors:
• XIAO, Weihong
  Shenzhen, Guangdong 518129 (CN)
• DAOJIAN, Dingjiu
  Shenzhen, Guangdong 518129 (CN)
• CHEN, Shangmin
  Shenzhen, Guangdong 518129 (CN)
• FENG, Tao
  Shenzhen, Guangdong 518129 (CN)

(74) Representative: Gill Jennings & Every LLP
The Broadgate Tower
20 Primrose Street
London EC2A 2ES (GB)

(54) **BASE STATION ANTENNA SYSTEM**

(57) This application provides a base station antenna system, including: an antenna module, configured to receive or transmit a radio signal; and a sensing module, where the sensing module includes a first air pressure measurement module, the first air pressure measurement module is configured to measure a first air pressure of a location of the antenna system, the first air pressure and a second air pressure are for calculating a mounting height of the antenna module, and the second air pressure is an air pressure of a location of a monitoring terminal. The base station antenna system can accurately measure a mounting height of the base station antenna system, which facilitates maintenance and management of the base station antenna system.

FIG. 1

## Description

This application claims priority to Chinese Patent Application No. 202310801000.0, filed with the China National Intellectual Property Administration on June 30, 2023 and entitled "BASE STATION ANTENNA SYSTEM", which is incorporated herein by reference in its entirety.

## TECHNICAL FIELD

This application relates to the field of mobile communication, and more specifically, to a base station antenna system.

## BACKGROUND

Currently, after a base station antenna system is deployed in an actual scenario, if parameters such as a mounting height of an antenna are manually obtained and maintained, there are problems such as heavy workload, low efficiency, significant human errors, and a long collection cycle.

## SUMMARY

Embodiments of this application provide a base station antenna system, which facilitates management of the base station antenna system by an operator.

According to a first aspect, a base station antenna system is provided. The base station antenna system includes: an antenna module, configured to receive or transmit a radio signal; and a sensing module, where the sensing module includes a first air pressure measurement module, the first air pressure measurement module is configured to measure a first air pressure of a location of the antenna module, the first air pressure and a second air pressure are for calculating a mounting height of the antenna module, and the second air pressure is an air pressure of a location of a monitoring terminal.

It should be understood that the mounting height of the antenna module may be an absolute vertical height difference between the antenna module and the location of the monitoring terminal.

In this embodiment of this application, the mounting height of the antenna module is calculated based on an air pressure difference between the first air pressure and the second air pressure. A calculation result of the mounting height is not affected by factors such as an altitude, and the calculation result is accurate. In addition, in this solution, the mounting height of the antenna module does not need to be manually measured, and parameters such as the mounting height of the antenna can be monitored and maintained in real time, which facilitates management of the base station antenna system by the operator.

With reference to the first aspect, in a possible implementation, the antenna module is installed on an antenna tower, and the antenna tower is fixed on a ground, where a distance between the monitoring terminal and an orthographic projection of the antenna module on the ground is less than or equal to a first preset value, and a height between the monitoring terminal and the ground is less than or equal to a second preset value.

With reference to the first aspect, in a possible implementation, the antenna module is installed on an antenna tower, the antenna tower is fixed on a building, and the building is fixed on a ground, where a distance between the monitoring terminal and an orthographic projection of the antenna module on the ground is less than or equal to a first preset value, and a height between the monitoring terminal and the ground is less than or equal to a second preset value.

In this embodiment of this application, a distance between the antenna module and the monitoring terminal on the horizontal plane is less than or equal to the first preset value, and the height between the monitoring terminal and the ground is less than or equal to the second preset value, so that accuracy of the mounting height of the antenna module obtained through calculation can be ensured.

With reference to the first aspect, in a possible implementation, the antenna module and the sensing module are connected in a wired manner through an antenna interface standards group AISG interface.

In this embodiment of this application, the antenna module can supply power to the sensing module through the AISG interface, and data transmission can be implemented between the antenna module and the sensing module through the AISG interface. This helps the sensing module return data such as the first air pressure, and helps the operator manage the base station antenna system. In addition, the AISG interface of the antenna module and the sensing module are connected in a wired manner, which helps reduce deployment costs of the sensing module.

With reference to the first aspect, in a possible implementation, the sensing module includes a first wireless backhaul module, and the first wireless backhaul module is configured to perform wireless data transmission between the sensing module and the antenna module.

In this embodiment of this application, the sensing module can further perform data transmission through the first wireless backhaul module. This helps the sensing module return data such as the first air pressure, and helps the operator manage the base station antenna system.

With reference to the first aspect, in a possible implementation, the monitoring terminal includes a second wireless backhaul module, and the second wireless backhaul module is configured to perform wireless data transmission between the monitoring terminal and the antenna module.

In this embodiment of this application, the monitoring terminal can perform data transmission through the second wireless backhaul module. This helps the monitoring terminal return data such as the second air pressure, and helps the operator manage the base station antenna system.

With reference to the first aspect, in a possible implementation, the antenna module is disposed in a radome, and the sensing module is disposed in the radome.

In this embodiment of this application, the sensing module can be disposed in the radome, and the radome can protect the sensing module from being affected by an external environment.

With reference to the first aspect, in a possible implementation, the sensing module further includes a light emitting apparatus, the light emitting apparatus is configured to emit visible light, and the visible light is for identifying the operator to which the antenna module belongs.

In this embodiment of this application, the visible light disposed in the sensing module can identify the operator to which the antenna module belongs, so as to facilitate the maintenance of the operator's assets.

With reference to the first aspect, in a possible implementation, the sensing module further includes any one or more of the following sensors: an infrared sensor, an acceleration sensor, a gyroscope, a temperature sensor, and a humidity sensor.

In this embodiment of this application, any one or more of the foregoing sensors may be configured to monitor whether a working environment and a working status of the antenna module is abnormal, or may be configured to detect an azimuth, a downtilt, or a roll angle of the antenna module, to facilitate maintenance and repair of the base station antenna system.

With reference to the first aspect, in a possible implementation, the sensing module further includes a global navigation satellite system, where the global navigation satellite system is configured to obtain three-dimensional coordinates of the antenna module or an altitude of the location of the antenna module.

With reference to the first aspect, in a possible implementation, the base station antenna system further includes the monitoring terminal.

Optionally, the monitoring terminal includes a second air pressure measurement module, where the second air pressure measurement module is configured to measure the second air pressure of the location of the monitoring terminal.

With reference to the first aspect, in a possible implementation, the base station antenna system further includes a mounting height calculation module, where the mounting height calculation module is configured to calculate the mounting height of the antenna module based on the first air pressure and the second air pressure.

According to a second aspect, a base station antenna system is provided. The base station antenna system includes: an antenna module, configured to receive or transmit a radio signal; and a sensing module, where the sensing module includes a first air pressure measurement module, the first air pressure measurement module is configured to measure a first air pressure of a location of the antenna module, the sensing module further includes a global navigation satellite system, the global navigation satellite system is configured to obtain an altitude of the location of the antenna module, and the first air pressure and the altitude are for calculating a mounting height of the antenna module.

In this embodiment of this application, the mounting height of the antenna module may also be the altitude of the location of the antenna module. However, an altitude measurement error is large, and an altitude measured each time may be different. In this case, even if an average value is obtained by measuring the altitude for a plurality of times, accuracy and consistency of mounting heights cannot be ensured. Therefore, an altitude obtained through direct measurement cannot be used as the mounting height of the antenna module.

When the mounting height of the antenna module refers to the altitude of the location of the antenna module, this embodiment of this application provides a base station antenna system. The sensing module may include the first air pressure measurement module and the global navigation satellite system, so that the altitude of the antenna module measured by the global navigation satellite system can be corrected based on the first air pressure, and the mounting height of the antenna of the base station antenna system can be obtained accurately and conveniently, thereby facilitating the maintenance and management of the base station antenna system.

With reference to the second aspect, in a possible implementation, the antenna module and the sensing module are connected in a wired manner through an antenna interface standards group AISG interface.

With reference to the second aspect, in a possible implementation, the sensing module includes a first wireless backhaul module, and the first wireless backhaul module is configured to perform wireless data transmission between the sensing module and the antenna module.

With reference to the second aspect, in a possible implementation, the antenna module is disposed in a radome, and the sensing module is disposed in the radome.

With reference to the second aspect, in a possible implementation, the sensing module further includes a light emitting apparatus, the light emitting apparatus is configured to emit visible light, and the visible light is for identifying an operator to which the antenna module belongs.

With reference to the second aspect, in a possible implementation, the sensing module further includes any one or more of the following sensors: an infrared sensor, an acceleration sensor, a gyroscope, a temperature sensor, and a humidity sensor.

## BRIEF DESCRIPTION OF DRAWINGS

FIG. 1 is a diagram of a structure of a base station antenna system according to an embodiment of this application;

FIG. 2 is a diagram of an application scenario of a base station antenna system according to an embodiment of this application;

FIG. 3 is a diagram of another application scenario of a base station antenna system according to an embodiment of this application;

FIG. 4 is a diagram of a structure of a sensing module according to an embodiment of this application;

FIG. 5 is a diagram of a structure of a base station antenna system according to an embodiment of this application;

FIG. 6 is a diagram of a structure of a base station antenna system according to an embodiment of this application;

FIG. 7 is a diagram of a structure of a base station antenna system according to an embodiment of this application; and

FIG. 8 is a diagram of a structure of a monitoring terminal according to an embodiment of this application.

## DESCRIPTION OF EMBODIMENTS

Terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

For ease of understanding, the following describes some concepts related to embodiments of this application.

Mounting height of an antenna: refers to a vertical distance between the antenna and a ground. Generally, the mounting height of the antenna affects the performance of the antenna. For example, in radio communication, the mounting height of the antenna may affect quality of signal transmission and reception. The higher the antenna is above the ground, the wider the coverage area of the antenna is. However, the antenna is also affected by strong winds. Therefore, the antenna needs to be installed more securely.

Azimuth: The azimuth of the antenna refers to an angle between a direction toward which the antenna points and the due north direction. For example, when the antenna points to the due north, the azimuth of the antenna is 0 degrees; when the antenna points to the due east, the azimuth of the antenna is 90 degrees.

Downtilt: The downtilt of the antenna refers to an angle at which the antenna points toward the ground. This angle is usually set to an optimal position for aligning the antenna with the required coverage area. For example, in satellite communication, the downtilt is usually set to an optimal position at which the antenna can receive a satellite signal.

Roll angle: The roll angle of the antenna refers to a rotation angle of the antenna on the horizontal plane. This angle is usually used to adjust the direction of the antenna to better align the antenna with a target.

Parameters such as the mounting height, the azimuth, the downtilt, and the roll angle of the antenna determine the quality and the coverage of an antenna signal. To improve quality of a radio signal and expand a coverage area of the radio signal, the antenna is usually mounted at a significant height. If the foregoing antenna parameters are manually obtained and maintained, there are problems such as heavy workload, low efficiency, significant human errors, a long collection cycle, and a failure to implement real-time monitoring on an antenna status. In addition, currently, after the antenna is deployed, it is difficult to determine which antenna belongs to which operator, and it is also difficult to determine whether a working environment of the antenna is secure enough.

An embodiment of this application provides a base station antenna system. The base station antenna system can obtain parameters such as the mounting height of the antenna in real time with high accuracy.

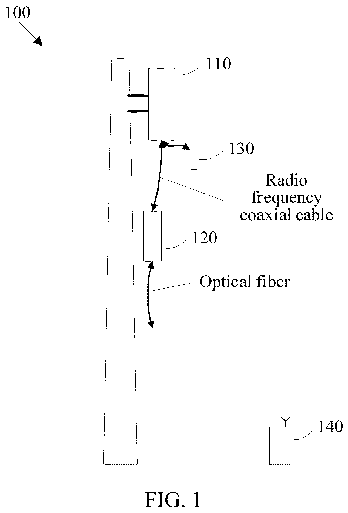

FIG. 1 is a diagram of a structure of a base station antenna system according to an embodiment of this application. As shown in FIG. 1, the base station antenna system 100 includes an antenna module 110, a remote radio unit (remote radio unit, RRU) 120, a sensing module 130, and a monitoring terminal 140.

The antenna module 110 may be, for example, a multi-frequency antenna system. The antenna module 110 may include a plurality of antennas. Each antenna can receive or transmit signals of different frequency bands. The antenna module 110 can simultaneously support a plurality of radio signals, for example, LTE signals and Wi-Fi signals.

The RRU 120 is a radio device, and is responsible for converting a digital signal into a radio frequency signal, and transmitting the radio frequency signal to the antenna, to communicate with user equipment. The RRU 120 is usually installed near the antenna, and is connected to the antenna module 110 through a radio frequency coaxial cable, to reduce loss and delay in signal transmission.

In some embodiments, the base station antenna system 100 may further include a building baseband unit (building baseband unit, BBU). The BBU is usually installed in an equipment room, and is mainly used to complete functions such as channel coding and decoding, baseband signal modulation and demodulation, and protocol processing. The BBU is generally connected to the RRU 120 through an optical fiber, and is configured to transmit a baseband digital signal.

The sensing module 130 includes a first air pressure measurement module, configured to measure an air pressure of a location of the sensing module 130. Installed near the antenna module 110, the sensing module 130 can measure a first air pressure of a location of the antenna module 110. The monitoring terminal 140 includes a second air pressure measurement module. The second air pressure measurement module is configured to measure an air pressure of a location of the monitoring terminal 140. The monitoring terminal 140 is installed near a ground, so that the sensing module 130 measures and monitors a second air pressure near the ground.

The first air pressure and the second air pressure are for calculating a mounting height of the antenna module 110, that is, an absolute height difference between the antenna system and the ground. Specifically, a height difference between the antenna module 110 and the monitoring terminal 140, that is, the mounting height of the antenna module 110, can be estimated based on an air pressure difference between the first air pressure and the second air pressure. For example, the mounting height of the antenna module 110 can be calculated according to the following empirical formula:

$$H = (RT/gM) \times \ln(P1/P2)$$

where H is a mounting height, R is a gas constant, T is a temperature, g is a gravitational acceleration, M is a molar mass of air molecules, P1 is the first air pressure, and P2 is the second air pressure.

In some embodiments, the base station antenna system may further include a mounting height calculation module. The mounting height calculation module is configured to calculate the mounting height of the antenna module 110 based on the first air pressure and the second air pressure. For example, the mounting height calculation module can communicate with the sensing module 130 and the monitoring terminal 140 to obtain the first air pressure and the second air pressure, and then calculate the mounting height of the antenna module 110 based on the air pressure difference between the first air pressure and the second air pressure.

It should be noted that, to ensure accurate calculation of the mounting height, a distance between the monitoring terminal 140 and the antenna module 110 on the horizontal plane may be less than or equal to a first preset value, that is, a distance between an orthographic projection of the antenna module 110 on the ground and the monitoring terminal 140 is less than or equal to the first preset value.

It should be noted that, installing the monitoring terminal 140 near the ground may be understood as that a height between the monitoring terminal 140 and the ground is less than or equal to a second preset value.

It should be noted that, installing the sensing module 130 near the antenna module 110 may be understood as that a distance between the sensing module 130 and the antenna module 110 is less than or equal to a preset threshold.

It should be understood that the first preset value and the second preset value are default values or values determined based on experience. For example, the first preset value and the second preset value are 5 meters and 2 meters respectively. The mounting height of the antenna measured within this range is accurate. This is not limited in this embodiment of this application.

In this embodiment of this application, to determine whether data of the mounting height obtained in real time is accurate, before the data of the mounting height is obtained, it may be first determined whether the distance between the monitoring terminal 140 and the antenna module 110 on the horizontal plane is less than or equal to the first preset value. For example, the sensing module 130 can obtain location information of the antenna module 110 in real time, and the monitoring terminal 140 can obtain location information of the monitoring terminal 140 in real time. Whether the distance between the monitoring terminal 140 and the antenna module 110 on the horizontal plane is less than or equal to the first preset value is determined with reference to the location information of the antenna module 110 and the monitoring terminal 140. If the distance between the monitoring terminal 140 and the antenna module 110 on the horizontal plane is less than or equal to the first preset value, the first air pressure and the second air pressure can be used to calculate the mounting height.

In a possible case, when the base station antenna system is deployed, the mounting height of the antenna does not refer to a height from the antenna to the ground. For example, after negotiation with an operator, a mounting height of an antenna is determined to be a height from the antenna to a horizontal plane. To measure the mounting height, the sensing module can be disposed near the antenna, and the monitoring terminal is disposed at a height at which the horizontal plane is located. In other words, in this embodiment of this application, the monitoring terminal can be flexibly deployed to measure the actual mounting height of the antenna.

It should be understood that the monitoring terminal 140 may be a mobile terminal or a handheld terminal. A type of the monitoring terminal 140 is not limited in this embodiment of this application. For example, the monitoring terminal 140 may be a portable electronic device that further includes another function like a personal digital assistant function and/or a music player function, such as a mobile phone, a tablet computer, or a wearable electronic device (for example, a smartwatch) having a wireless communication function. An example embodiment of the portable electronic device includes but is not limited to a portable electronic device using iOS®, Android®, Microsoft®, or another operating system. The foregoing portable electronic device may alternatively be another portable electronic device, like a laptop (Laptop). It should be further understood that, in some other embodiments, the foregoing electronic device may not be the portable electronic device but a desktop computer.

It should be understood that the monitoring terminal may be a part of the base station antenna system. For example, the monitoring terminal may be located in the equipment room near the base station antenna system, or may be located at a part that is close to the ground and that is of an antenna tower in which the antenna module 110 is located. Alternatively, the monitoring terminal may not be a part of the base station antenna system, and the base station antenna system can obtain the second air pressure of the location of the monitoring terminal. For example, a request message is sent to the monitoring terminal, to request measurement data of the second air pressure.

It should be understood that an air pressure sensor or an air pressure measurement module in this embodiment of this application may be, for example, an apparatus that can measure an air pressure, such as a barometer or a differential manometer. A type of the air pressure sensor is not limited in this embodiment of this application.

In a possible case, the mounting height of the antenna module 110 may also be an altitude of the location of the antenna module 110. However, an altitude measurement error is large, and an altitude measured each time may be different. In this case, even if an average value is obtained by measuring the altitude for a plurality of times, accuracy and consistency of mounting heights cannot be ensured. Therefore, an altitude obtained through direct measurement cannot be used as the mounting height of the antenna module 110. When the mounting height of the antenna module 110 refers to the altitude of the location of the antenna module 110, this embodiment of this application provides a base station antenna system, so that the mounting height of the antenna of the base station antenna system can be obtained accurately and conveniently, thereby facilitating the maintenance and management of the base station antenna system.

In some embodiments, the sensing module 130 may be further provided with a global navigation satellite system (global navigation satellite system, GNSS), for example, a positioning system such as a global positioning system (Global Positioning System, GPS). The global navigation satellite system can be used to measure three-dimensional coordinates of the location of the antenna module 110, to obtain the altitude of the location of the antenna module 110. For example, the global navigation satellite system may be a GPS signal receiver. A distance between the receiver and a satellite is calculated by using a satellite signal received by the GPS signal receiver. Then, a location of the satellite in space is determined based on orbital parameters and clock biases of the satellite. Next, coordinates of the receiver in the rectangular coordinate system in space are solved based on correction for errors such as the clock biases and atmospheric delay of the receiver. Finally, the coordinates are converted into longitude, latitude, and altitude in the geographical coordinate system, that is, the three-dimensional coordinates of the antenna module 110.

It is well known that there is a correspondence between an air pressure and an altitude, that is, the higher the altitude is, the lower the air pressure is. Therefore, in this embodiment of this application, the altitude of the antenna module 110 can be further estimated by using the air pressure of the location of the antenna module 110. As described above, the sensing module 130 includes the first air pressure measurement module, configured to measure the air pressure of the location of the sensing module 130. Installed near the antenna module 110, the sensing module 130 can measure the first air pressure of the location of the antenna module 110. The altitude of the location of the antenna module 110 can also be obtained based on the first air pressure.

It should be noted that a change in air pressure data measured at a same location is usually small, that is, an error range of altitude data obtained through air pressure conversion is usually small. However, the altitude obtained through air pressure conversion is easily affected by factors such as temperature, humidity, and weather, and cannot be used as the mounting height of the antenna module 110.

In this embodiment of this application, altitude data of the location of the antenna module 110 obtained through the global navigation satellite system is denoted as first altitude data, and altitude data of the location of the antenna module 110 obtained through first air pressure conversion is denoted as second altitude data. An error range of the first altitude data is large, and an error range of the second altitude data is small. In this embodiment of this application, the first altitude data can be corrected based on the second altitude data, to obtain an accurate mounting height of the antenna module 110 with high consistency. In other words, in this embodiment of this application, the altitude obtained through the global navigation satellite system can be corrected by using the first air pressure, to obtain an accurate mounting height of the antenna module 110 with high consistency.

For example, a lowest altitude of the first altitude data is 975 meters, and a highest altitude is 1025 meters; and a lowest altitude of the second altitude data is 990 meters, and a highest altitude is 1000 meters. Data below 990 meters or above 1000 meters are removed from the first altitude data, and an average value of remaining data is used as the mounting height of the antenna module 110.

In some embodiments, the sensing module 130 may be further provided with a temperature sensor, configured to obtain an ambient temperature near the sensing module 130. Because the air pressure is greatly affected by the temperature, in this application, the first air pressure can be further corrected by using the ambient temperature, and the corrected first air pressure is further used to correct the altitude measured by using the global navigation satellite system, to obtain an accurate mounting height of the antenna module 110 with high consistency.

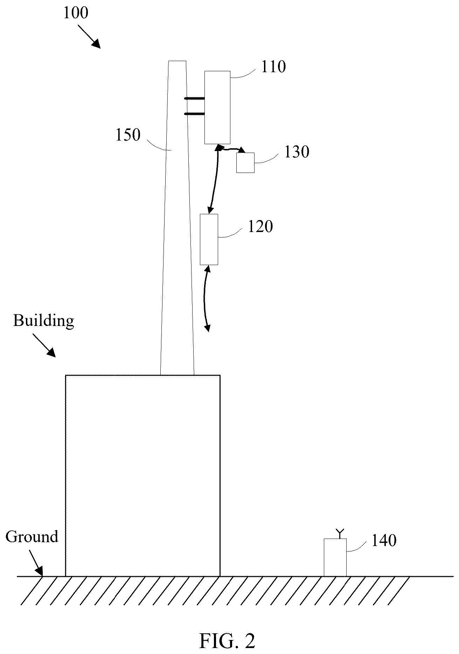

It should be understood that, in this case, the base station antenna system may not include the monitoring terminal 140. FIG. 2 is a diagram of an application scenario of a base station antenna system according to an embodiment of this application. As shown in FIG. 2, the base station antenna system 100 may further include an antenna tower 150, and the antenna module 110 may be installed on the antenna tower 150. Generally, the antenna tower 150 may be fixed on the top of a building to obtain a higher mounting height, thereby improving quality of the radio signal and expanding the coverage area of the radio signal.

The monitoring terminal 140 is disposed near the ground, so that the second air pressure near the ground can be obtained. The mounting height of the antenna module 110 can be accurately calculated with reference to the first air pressure obtained by the sensing module 130 disposed near the antenna module 110.

It should be understood that, in this case, the mounting height of the antenna module 110 is a vertical distance from the antenna module 110 to the ground (not the top of the building).

It should be understood that the building is fixed on the ground, and the top of the building is at a specific height from the ground.

It should be understood that the building may be, for example, a man-made building such as an edifice and a skyscraper. This is not limited in this embodiment of this application.

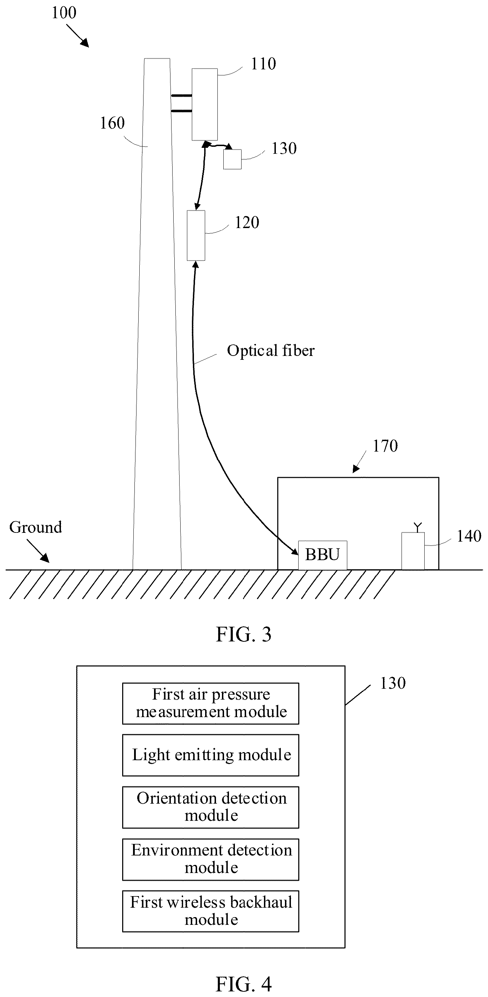

FIG. 3 is a diagram of another application scenario of a base station antenna system according to an embodiment of this application. As shown in FIG. 3, the antenna module 110 may be installed at an upper part of the antenna tower 160. Different from the embodiment shown in FIG. 2, the antenna tower 160 itself has a significant height, and the antenna tower 160 is not fixed on the top of the building, but is fixed on the ground.

In this case, the monitoring terminal 140 is disposed near the ground, so that the second air pressure near the ground can be obtained. With reference to the first air pressure obtained by the sensing module 130 disposed near the antenna module 110, the mounting height of the antenna module 110 can be accurately calculated.

Generally, an equipment room 170 may be disposed near the antenna tower 160. The equipment room 170 is used to accommodate devices such as a base station control unit, a power supply, an air conditioner, and a BBU.

In some embodiments, the monitoring terminal 140 may be disposed inside the equipment room 170.

In some embodiments, the monitoring terminal 140 may be further fixed on a part that is of the antenna tower 160 and that is close to the ground.

FIG. 4 is a diagram of a structure of a sensing module according to an embodiment of this application. As shown in FIG. 4, the sensing module may include a first air pressure measurement module, a light emitting module, an orientation detection module, an environment detection module, a first wireless backhaul module, and the like.

The first air pressure measurement module may include at least one air pressure sensor, configured to measure an air pressure. Disposed at a height at which the antenna module 110 is located, the sensing module 130 can measure the air pressure of the location of the antenna module 110.

It should be understood that the air pressure sensor may be, for example, an apparatus that can measure an air pressure, such as a barometer or a differential manometer. This is not limited in this embodiment of this application.

The light emitting module can emit visible light, and the visible light is for identifying an operator to which the antenna module 110 belongs. For example, the light emitting module may include at least one light source. The operator to which the antenna module 110 belongs can be distinguished by setting a quantity, a color, or a flashing mode of the at least one light source. For example, if the antenna module 110 belongs to an operator A, the light emitting module includes one light source; or if the antenna module 110 belongs to an operator B, the light emitting module includes two light sources; or if the antenna module 110 belongs to the operator A, the light emitting module may include a red light source to emit red light; or if the antenna module 110 belongs to the operator B, the light emitting module may include a yellow light source to emit yellow light; or if the antenna module 110 belongs to the operator A, the light emitting module may flash in a first flashing mode; or if the antenna module 110 belongs to the operator B, the light emitting module may flash in a second flashing mode.

It should be understood that the light source may be a light emitting apparatus such as a light emitting diode (light emitting diode, LED), a neon lamp, a xenon lamp, or a cold light source. A type of the light source is not limited in this embodiment of this application.

In some embodiments, the light emitting module can receive an indication message of the monitoring terminal 140, where the indication message can instruct the light emitting module to emit visible light, to identify the operator to which the antenna module 110 belongs.

The environment detection module may include but is not limited to apparatuses such as an infrared sensor, a temperature sensor, a humidity sensor, an acceleration sensor, and a gyroscope, to detect a working environment and a working status of the antenna module 110.

Because a base station is usually installed in the field or on the top of a tall building, the base station is easily affected by the weather. For example, severe weather conditions such as storm and lightning may damage the base station antenna. Wind and gravity may cause the antenna to shift. Temperature fluctuation in the field may expose the antenna to excessive heat or cold, leading to component failure. In addition, animals may approach and damage the base station antenna.

The infrared sensor is disposed in the sensing module to identify whether there is a living being approaching the antenna. If a living being approaches the antenna, a warning message can be sent back to notify a user of the abnormal approaching of the living being to the antenna, which may cause damage to the antenna; or a sound may be emitted to shock the living being.

The temperature sensor and the humidity sensor are disposed in the sensing module to identify whether the working temperature and humidity of the antenna are normal. If the temperature or humidity is higher than or lower than a specified threshold, a warning message is sent back to notify the user of the abnormal temperature or humidity.

The gyroscope and the acceleration sensor are disposed in the sensing module to identify whether the antenna is abnormally shifted. If the antenna is abnormally shifted, a warning message can be sent back to notify the user of the abnormal shift of the antenna.

Apparatuses such as the infrared sensor, the temperature sensor, the humidity sensor, the acceleration sensor, the gyroscope, and the like are disposed in the sensing module, to monitor the working environment and the working status of the antenna in real time. When a network fails, a fault point can be quickly located, thereby improving network security and reliability.

The orientation detection module may include but is not limited to a global navigation satellite system (global navigation satellite system, GNSS), an acceleration sensor, and a gyroscope. The GNSS can be used to determine a geographical location of the base station antenna system, or used to obtain the three-dimensional coordinates of the antenna module 110 or obtain the altitude of the location of the antenna module 110. The acceleration sensor and the gyroscope can be used to determine the downtilt and the roll angle of the antenna module 110.

It should be noted that, apparatuses such as the acceleration sensor and the gyroscope in the environment detection module can be reused as apparatuses such as an acceleration sensor and a gyroscope in the orientation detection module.

The acceleration sensor is a sensor that can measure acceleration of an object. The acceleration sensor can detect an acceleration change of an object during movement, and convert the acceleration change into an electrical signal for output. Common acceleration sensors include piezoelectric, capacitive, and micro-electro-mechanical system (MEMS) sensors. When the antenna does not tilt or rotate, a 3-axis acceleration sensor detects only gravitational acceleration. When the antenna tilts or rotates, the gravitational acceleration generates different projections on three axes. The downtilt and the roll angle of the antenna can be inversely solved by measuring the acceleration components on the three axes.

The gyroscope is an apparatus configured to sense and maintain the direction based on conservation of angular momentum. The gyroscope is mainly composed of a rotatable rotor located at an axis. Because of angular momentum of the rotor, the gyroscope tends to resist the direction change once the gyroscope starts to rotate. The gyroscope has two basic characteristics: rigidity and precession. The principle of measuring the downtilt and the roll angle of the antenna through the gyroscope relies on the rigidity of the gyroscope. By measuring a rotation angle of the antenna relative to the inertial space, a tilt angle and a rotation angle of the antenna relative to the horizontal plane are calculated.

In some embodiments, the GNSS can be further used to measure an azimuth of the antenna module 110. Specifically, the azimuth of the antenna module 110 is calculated based on phase double differences of radio frequency signals received by two GNSSs at different locations. For example, the GNSS disposed in the sensing module 130 is denoted as a first GNSS, and the GNSS placed at another location is denoted as a second GNSS. The first GNSS and the second GNSS can receive signals from the satellite and record timestamps of receiving the signals. Distances from the satellite to the first GNSS and the second GNSS can be calculated based on different propagation speeds and timestamps of these signals. If a distance between the first GNSS and the second GNSS is known (through measurement or prior knowledge), the location of the antenna module 110 can be calculated by using a geometric relationship of a triangle. The location of the antenna module 110 and the location of the GPS satellite at another location are used to calculate the azimuth of the antenna module 110.

The first wireless backhaul module may generally include components such as a SIM card and an antenna, and can be connected to a wireless network and perform wireless data transmission with the antenna module 110, to receive control information or wireless backhaul measurement data and a warning message.

It should be noted that the control information may be, for example, a control message for instructing the sensing module 130 to perform measurement, or related control information for adjusting settings of the sensing module.

In some embodiments, the sensing module 130 may not include the first wireless backhaul module, but receive the control information or the wireless backhaul measurement data or the warning message through a cable.

It should be understood that the light emitting module, the orientation detection module, the environment detection module, and the wireless backhaul module are all optional modules.

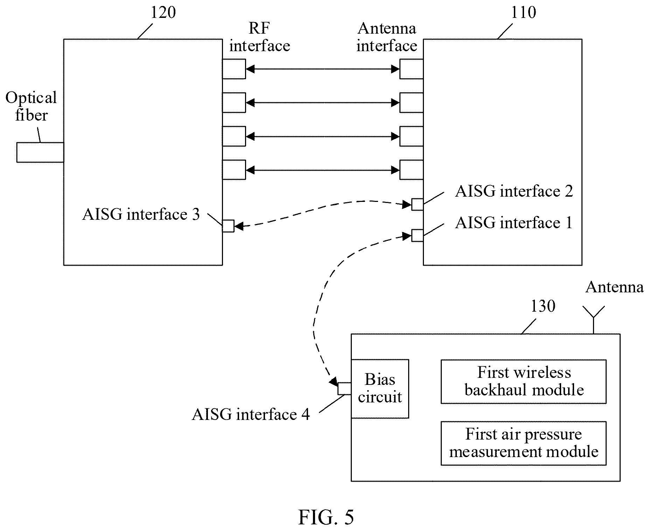

FIG. 5 is a diagram of a structure of a base station antenna system according to an embodiment of this application. As shown in FIG. 5, the antenna module 110 may include a plurality of antenna interfaces, and correspondingly, the RRU 120 may include a plurality of radio frequency (radio frequency, RF) interfaces. The antenna module 110 can communicate with the RRU 120 through the plurality of antenna interfaces and the plurality of radio frequency interfaces.

The antenna module 110 may further include a plurality of antenna interface standards group (antenna interface standards group, AISG) interfaces. The AISG interface may be understood as a standard interface.

Refer to FIG. 5. The antenna module 110 may include an AISG interface 1 and an AISG interface 2, the RRU 120 may include a corresponding AISG interface 3, and the sensing module 130 may include a corresponding AISG interface 4. The AISG interface 1 and the AISG interface 4 are connected in a wired manner, and the AISG interface 2 and the AISG interface 3 are connected in a wired manner.

By connecting the AISG interface 1 to the AISG interface 4, the antenna module 110 can supply power to the sensing module 130. Specifically, a signal transmitted by the AISG interface may include a radio frequency signal and a direct current signal. A bias circuit disposed in the sensing module 130 can separate the radio frequency signal from the direct current signal, to obtain the direct current signal.

In this embodiment of this application, after obtaining measurement data, the sensing module 130 can wirelessly transmit the measurement data to the antenna module 110 through the first wireless backhaul module. The antenna module 110 can transmit the measurement data to the RRU 120 in a wired manner through the AISG interface 2 and the AISG interface 3, and the RRU 120 returns the measurement data to a server through optical fiber.

In some embodiments, after obtaining the measurement data, the sensing module 130 can further transmit the measurement data to the antenna module 110 in a wired manner through the AISG interface 4 and the AISG interface 1. For example, the measurement data may be carried in an on-off keying (on-off keying, OOK) signal. The antenna module 110 can transmit the measurement data to the RRU 120 in a wired manner through the AISG interface 2 and the AISG interface 3, and the RRU 120 returns the measurement data to the server through optical fiber.

It should be noted that the server may be a server of the operator to which the antenna module 110 belongs.

It should be noted that, if a solution of wired transmission of the measurement data is selected, the sensing module 130 may be provided with the first wireless backhaul module, or may not be provided with the first wireless backhaul module. This is not limited in this embodiment of this application.

It should be understood that the measurement data includes at least the first air pressure of the location of the antenna module 110.

It should be understood that, in this embodiment of this application, the AISG interface inherent in a conventional base station antenna system is used to supply power to each module in the sensing module 130 and implement data transmission, so that an original base station antenna system can be compatible to a maximum extent, thereby reducing deployment costs of the sensing module.

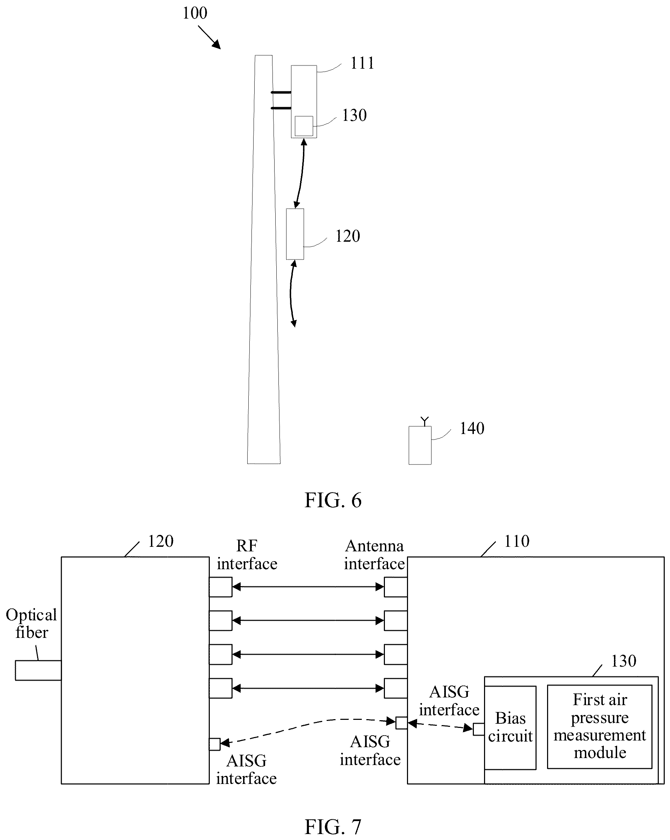

FIG. 6 is a diagram of a structure of a base station antenna system according to an embodiment of this application. FIG. 7 is a diagram of a structure of a base station antenna system according to an embodiment of this application. As shown in FIG. 6 and FIG. 7, the sensing module 130 can be disposed in the antenna module 110. Specifically, the antenna module 110 may include a radome and at least one antenna, and the at least one antenna and the sensing module 130 are disposed in the radome. The antenna module 110 can supply power to the sensing module 130 through the AISG interface, and the antenna module 110 and the sensing module 130 can transmit data or other information through the AISG interface.

In this embodiment of this application, the sensing module 130 can be disposed in the antenna module 110, to prevent the sensing module from being affected by an external environment.

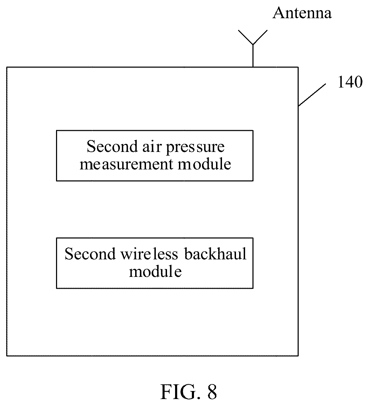

FIG. 8 is a diagram of a structure of a monitoring terminal according to an embodiment of this application. As shown in FIG. 8, the monitoring terminal 140 may include a second air pressure measurement module and a second wireless backhaul module.

The second air pressure measurement module may include at least one air pressure sensor, configured to measure the air pressure. The air pressure sensor may be, for example, an apparatus that can measure the air pressure, such as a barometer or a differential manometer. This is not limited in this embodiment of this application.

The second wireless backhaul module may include, for example, components such as a SIM card and an antenna, and can be connected to a wireless network. Wireless data transmission can be performed between the second wireless backhaul module and the antenna module 110, so that control information or wireless backhauled measurement data can be received. The measurement data may include, for example, a second air pressure of a location of the monitoring terminal 140.

It should be noted that, the measurement data can be transmitted through the antenna module 110 to the server of the operator to which the antenna module 110 belongs.

It should be noted that, the control information may be, for example, control information for instructing the monitoring terminal 140 to perform measurement, or related control information for adjusting settings of the monitoring terminal 140.

In some embodiments, the monitoring terminal 140 may either not include the second wireless backhaul module, but transmits the measurement data and receives the control information in a wired manner. For example, the monitoring terminal 140 can be connected to a device such as the BBU, to return the measurement data to the server of the operator to which the antenna module 110 belongs.

It should be noted that the monitoring terminal 140 may further include components necessary for maintaining running, for example, a power supply or a battery, or may include components such as a display screen, to facilitate user operation.

The foregoing embodiments may be used separately, or may be used in combination to implement different technical effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A base station antenna system, comprising:

    an antenna module, configured to receive or transmit a radio signal; and

    a sensing module, wherein the sensing module comprises a first air pressure measurement module, the first air pressure measurement module is configured to measure a first air pressure of a location of the antenna module, the first air pressure and a second air pressure are for calculating a mounting height of the antenna module, and the second air pressure is an air pressure of a location of a monitoring terminal.

2. The base station antenna system according to claim 1, wherein the antenna module is installed on an antenna tower, and the antenna tower is fixed on a ground, wherein
a distance between the monitoring terminal and an orthographic projection of the antenna module on the ground is less than or equal to a first preset value, and a height between the monitoring terminal and the ground is less than or equal to a second preset value.

3. The base station antenna system according to claim 1, wherein the antenna module is installed on an antenna tower, the antenna tower is fixed on a building, and the building is fixed on a ground, wherein
a distance between the monitoring terminal and an orthographic projection of the antenna module on the ground is less than or equal to a first preset value, and a height between the monitoring terminal and the ground is less than or equal to a second preset value.

4. The base station antenna system according to any one of claims 1 to 3, wherein the antenna module and the sensing module are connected in a wired manner through an antenna interface standards group AISG interface.

5. The base station antenna system according to any one of claims 1 to 4, wherein the sensing module comprises a first wireless backhaul module, and the first wireless backhaul module is configured to perform wireless data transmission between the sensing module and the antenna module.

6. The base station antenna system according to any one of claims 1 to 5, wherein the monitoring terminal comprises a second wireless backhaul module, and the second wireless backhaul module is configured to perform wireless data transmission between the monitoring terminal and the antenna module.

7. The base station antenna system according to any one of claims 1 to 6, wherein the antenna module is disposed in a radome, and the sensing module is disposed in the radome.

8. The base station antenna system according to any one of claims 1 to 7, wherein the sensing module further comprises a light emitting apparatus, the light emitting apparatus is configured to emit visible light, and the visible light is for identifying an operator to which the antenna module belongs.

9. The base station antenna system according to any one of claims 1 to 8, wherein the sensing module further comprises any one or more of the following sensors: an infrared sensor, an acceleration sensor, a gyroscope, a temperature sensor, and a humidity sensor.

10. The base station antenna system according to any one of claims 1 to 9, wherein the sensing module further comprises a global navigation satellite system, and the global navigation satellite system is configured to obtain three-dimensional coordinates of the antenna module or an altitude of the location of the antenna module.

11. The base station antenna system according to any one of claims 1 to 9, wherein the base station antenna system further comprises the monitoring terminal.

12. The base station antenna system according to any one of claims 1 to 9, wherein the base station antenna system further comprises a mounting height calculation module, and the mounting height calculation module is configured to calculate the mounting height of the antenna module based on the first air pressure and the second air pressure.

13. A base station antenna system, comprising:

an antenna module, configured to receive or transmit a radio signal; and
a sensing module, wherein the sensing module comprises a first air pressure measurement module, and the first air pressure measurement module is configured to measure a first air pressure of a location of the antenna module, wherein
the sensing module further comprises a global navigation satellite system, the global navigation satellite system is configured to obtain an altitude of the location of the antenna module, and the first air pressure and the altitude are for calculating a mounting height of the antenna module.

14. The base station antenna system according to claim 13, wherein the antenna module and the sensing module are connected in a wired manner through an antenna interface standards group AISG interface.

15. The base station antenna system according to claim 13 or 14, wherein the sensing module comprises a first wireless backhaul module, and the first wireless backhaul module is configured to perform wireless data transmission between the sensing module and the antenna module.

16. The base station antenna system according to any one of claims 13 to 15, wherein the antenna module is disposed in a radome, and the sensing module is disposed in the radome.

17. The base station antenna system according to any one of claims 13 to 16, wherein the sensing module further comprises a light emitting apparatus, the light emitting apparatus is configured to emit visible light, and the visible light is for identifying an operator to which the antenna module belongs.

18. The base station antenna system according to any one of claims 13 to 16, wherein the sensing module further comprises any one or more of the following sensors: an infrared sensor, an acceleration sensor, a gyroscope, a temperature sensor, and a humidity sensor.

FIG. 1

FIG. 2

FIG. 3

FIG. 4

FIG. 5

FIG. 6

FIG. 7

Antenna

140

Second air pressure
measurement module

Second wireless backhaul
module

FIG. 8

## INTERNATIONAL SEARCH REPORT

| | International application No. |
|---|---|
| | **PCT/CN2024/098897** |

| A. | CLASSIFICATION OF SUBJECT MATTER |
|---|---|

H04Q1/02(2006.01)i; G01D21/02(2006.01)i

According to International Patent Classification (IPC) or to both national classification and IPC

| B. | FIELDS SEARCHED |
|---|---|

Minimum documentation searched (classification system followed by classification symbols)

IPC: H04Q G01D

Documentation searched other than minimum documentation to the extent that such documents are included in the fields searched

Electronic data base consulted during the international search (name of data base and, where practicable, search terms used)

CNTXT; VEN; ENTXTC; CNKI: 天线, 挂高, 高度, 高程, 地面, 海平面, 海拔, 气压, 计算, 姿态, 位姿, 工参, 定位, 全球定位系统, antenna, height, elevation, ground, altitude, sea level, pressure, calculate, pose, location, position, GPS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 218724323 U (HUAWEI TECHNOLOGIES CO., LTD.) 24 March 2023 (2023-03-24) description, paragraphs [0001]-[0126], and figures 1a-5 | 1-12 |
| Y | CN 218724323 U (HUAWEI TECHNOLOGIES CO., LTD.) 24 March 2023 (2023-03-24) description, paragraphs [0001]-[0126], and figures 1a-5 | 13-18 |
| Y | CN 107621650 A (FUJIAN BOYU IOT TECHNOLOGY CO., LTD.) 23 January 2018 (2018-01-23) description, paragraphs [0001]-[0028], and figure 1 | 13-18 |
| X | CN 218724322 U (HUAWEI TECHNOLOGIES CO., LTD.) 24 March 2023 (2023-03-24) description, paragraphs [0001]-[0128], and figures 1a-5 | 1-12 |
| A | CN 105424001 A (BEIJING RIYUEJIUTIAN TECHNOLOGY CO., LTD.) 23 March 2016 (2016-03-23) entire document | 1-18 |
| A | CN 108592859 A (DONGGUAN RITIAN COMMUNICATION TECHNOLOGY CO., LTD.) 28 September 2018 (2018-09-28) entire document | 1-18 |

| ✓ | Further documents are listed in the continuation of Box C. | ✓ | See patent family annex. |
|---|---|---|---|

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 August 2024** | **18 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/098897** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115903089 A (SUN HONGMING) 04 April 2023 (2023-04-04)<br>entire document | 1-18 |
| A | US 2005176441 A1 (Joseph W. Jurecka) 11 August 2005 (2005-08-11)<br>entire document | 1-18 |

Form PCT/ISA/210 (second sheet) (July 2022)

**INTERNATIONAL SEARCH REPORT**
Information on patent family members

International application No.

**PCT/CN2024/098897**

| Patent document cited in search report | | | Publication date (day/month/year) | Patent family member(s) | Publication date (day/month/year) |
|---|---|---|---|---|---|
| CN | 218724323 | U | 24 March 2023 | None | |
| CN | 107621650 | A | 23 January 2018 | None | |
| CN | 218724322 | U | 24 March 2023 | None | |
| CN | 105424001 | A | 23 March 2016 | None | |
| CN | 108592859 | A | 28 September 2018 | None | |
| CN | 115903089 | A | 04 April 2023 | None | |
| US | 2005176441 | A1 | 11 August 2005 | None | |

Form PCT/ISA/210 (patent family annex) (July 2022)

**EP 4 716 231 A1**

## REFERENCES CITED IN THE DESCRIPTION

**Patent documents cited in the description**

- CN 202310801000